# EUROPEAN PATENT SPECIFICATION

(11) **EP 1 151 678 B1**
(45) Date of publication and mention of the grant of the patent: **19.11.2003**
(21) Application number: 01101513.8
(22) Date of filing: 24.01.2001
(51) Int. Cl.: A23N 7/00, A23N 7/02

(54) **A method and apparatus for transferring and treating food products**
Verfahren und Vorrichtung zum Überführen und zur Behandlung von Nahrungsmitteln
Procédé et dispositif pour le transfert et le traitement de produits alimentaires

(30) Priority: 04.05.2000 IT PR000029
(43) Date of publication of application: 07.11.2001
(73) Proprietor: Blockfood S.r.l., 43054 Mezzani (Parma) (IT)
(72) Inventor: Candiani, Davide, Frazione Sant'Andrea 43030 Torrile Parma (IT)
(74) Representative: Gotra, Stefano

(56) References cited:
- US-A- 2 272 677
- US-A- 4 444 096

## Description

The present invention relates to a method and an apparatus for transferring and treating food products.

Both the apparatus and the method find their application mostly in the processing of produce, such as tomatoes, and can be used for instance in order to peel or remove the stalk from the product before further processing operations.

To achieve the aforesaid purposes, from US 4,444,096 an apparatus is known in which the products are introduced on a conveyer constituted by a plurality of rollers, positioned with their longitudinal axis perpendicular to the direction of travel of the conveyer.

The conveyer is driven relative to a fixed frame by means of chains positioned on the side of the conveyer itself and meshing with gear wheels keyed respectively onto a drive shaft and onto a transmission shaft.

The rollers constituting the conveyer are free to rotate about their longitudinal axis and are associated in pairs of rollers mutually counter-rotating to pinch the product and remove for instance its peel or stalk.

To set the rollers in rotation about their longitudinal axis, one of the two rollers that generates a torque is integral with a gear wheel which meshes with a fixed rack, integral with the frame of the apparatus.

Although they are in fact able to peel or remove the stalk from the products, known apparatuses nonetheless present some drawbacks.

In the first speed the rotational velocity of the rollers varies with variations in the velocity of advance of the conveyer with the consequence that, as the velocity of advance of the conveyer increases, the gear wheel integral with one of the roller constituting a pair is set in rotation by the rack at a greater speed. Hence the selection of the velocity of advance of the conveyer must be mediated between two opposing needs, i.e. between the need for a high production rate, whereto corresponds a high velocity of advance of the conveyer, and the need not to damage the product or remove too much pulp due to the high velocity of rotation of the opposite rollers.

Secondly, known apparatuses are particularly noisy due to the enmeshing between the rack and the gear wheels integral with the rollers. In particular the rack is associated only to the upper segment of the conveyer and thus the enmeshing is not continuous; the moment the gear wheels integral with the rollers and the rack start to enmesh with each other, there is a high level of noise which in some extreme cases does not allow personnel to be present during the operation of the apparatus.

Document US 2,272,677 discloses an apparatus for handling and treating food products, in particular fruit and vegetables, comprising a conveyer constituted by a plurality of rollers, positioned with their longitudinal axis perpendicular to the direction of travel of the conveyer.

The conveyer is driven relative to a fixed frame by means of first chains positioned on the side of the conveyer itself and enmeshing with first gear wheels keyed respectively onto a first drive shaft and onto a first transmission shaft.

The rollers constituting the conveyer are free to rotate about their longitudinal axis and are associated in pairs of rollers mutually counter-rotating to pinch the product and remove for instance its peel or stalk.

The rollers are set in rotation at a velocity that is indipendent from the velocity of advance of the conveyer.

The rollers are set in rotation by means of second chains positioned under an upper segment of the conveyer, said chains enmeshing with second gear wheels keyed respectively onto a second drive shaft and onto a second transmission shaft.

Said second chains enmesh with gear wheels which are integral with correspondent rollers.

Second chains are driven at a velocity that is variable and indipendent from the velocity of advance of the conveyer. The aforesaid second chains are positioned and connected to the gear wheels (integral with the rollers) only along a short upper segment of the conveyer. Consequently, the rollers positioned on the lower segment of the conveyer do not rotate during the advance of the conveyer itself.

The apparatus briefly discussed presents some important drawbacks.

First of all, because of the continuous enmeshing/ungearing between the gear wheels of the rollers and the second chains, the apparatus presents high level of noise.

Secondly, the continuous enmeshing/ungearing between the gear wheels associated to the rollers and the second chains causes rapid mechanical wear of the gear wheels themselves.

An aim of the present invention is to eliminate the aforesaid drawbacks making available a method and an apparatus for transferring and treating food products in which the production rate can be increased without thereby interfering with the quality of the processed product.

A further aim of the present invention is to make available an apparatus that generates a limited level of noise.

Said aims are fully achieved by the method and by the apparatus for transferring and treating food products of the present invention, which is characterised by the contents of the claims set out below and in particular in that the rollers of the apparatus are set in rotation at a velocity that is independent from the velocity of advance of the conveyer and are preferably operatively connected to a driving element that is movable relative to the base structure of the apparatus the rollers are originally kept in rotation along the whole development of the conveyer.

The driving element preferably comprises at least two sectors for enmeshing with gear wheels integral with the rollers, to be able to offset two adjacent gear wheels along the longitudinal axis, and it is preferably obtained by means of a chain driven by at least a gear wheel rotating on the base structure and keyed onto a transmission shaft for motorising the conveyer.

The method provides in particular for the rotational velocity of the rollers that effect the pinching operation to be independent of the velocity of advance of the conveyer the rollers are originally kept in rotation along a whole development of the conveyer.

This and other features shall become more readily apparent from the following description of a preferred embodiment illustrated, purely by way of non limiting example, in the accompanying drawing tables, in which:
- Figure 1 shows a partially sectioned front view of an apparatus according to the present invention;
- Figure 2 shows an additional partially sectioned front view of the apparatus of Figure 1.

With reference to the figures, the reference number 1 globally indicates and apparatus for transferring and treating food products, such as produce. Such an apparatus, depending on the product to be treated, can peel the product, remove it from the stem, or remove its stalk.

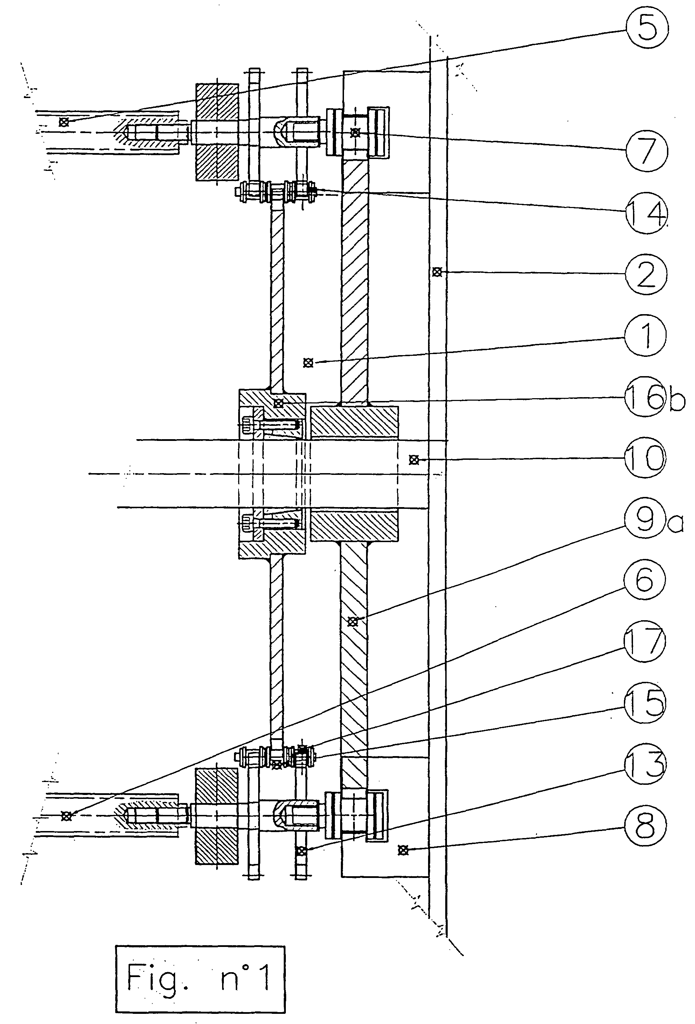

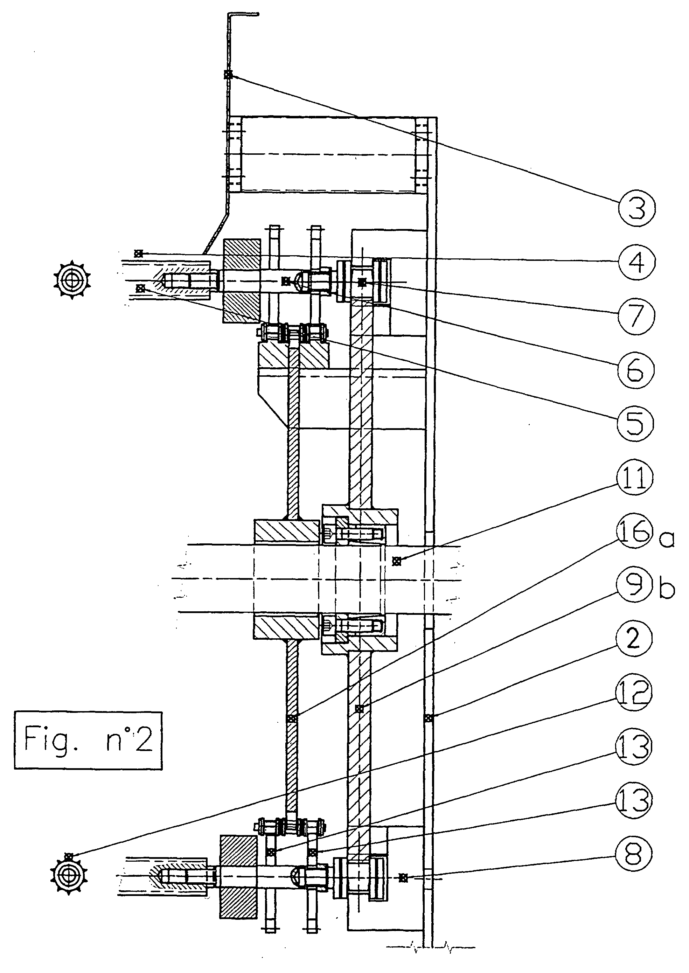

As shown in Figure 1 and 2, the apparatus 1 is composed of a frame which serves as a base structure 2 for moving organs.

The frame superiorly presents a compartment 3 which receives the products to be treated and routes them towards a conveyer 4 that closes inferiorly the compartment 3.

The conveyer 4 comprises a plurality of rollers 5, positioned with their longitudinal axis 6 perpendicular to the direction of advance of the conveyer 4.

The ends of the rollers 5 are mounted, free to rotate, on elements of a chain 7, able to advance relative to the base structure 2 internally to a seat 8.

The conveyer 4 is therefore engaged with the ability to advance relative to the base structure 2, and its advancing motion is generated by gear wheels 9a which enmesh with the chains 7 positioned at the sides of the conveyer itself. Figure 1 shows the motorised gear wheels 9a, keyed onto a drive shaft 10, whilst Figure 2 shows transmission gear wheels 9b, mounted idle on a transmission shaft 11.

The rollers 5 can rotate about their own longitudinal axis 6 and are associated in pairs of rollers mutually counter-rotating to remove a portion of the products to be treated. The removal of the peel or of the stalk is facilitated by the presence of serrations 12 uniformly distributed on the outer circumference of the rollers 5. The configuration of the rollers 5 is shown in detail in Figure 2, in which a cross section of a pair of counter-rotating rollers has been introduced.

In particular the rollers 5 are originally set in rotation at a velocity that is independent from the velocity of advance of the conveyer 4.

Each pair of counter-rotating rollers has a roller integral with a gear wheel 13 which, during the advancing motion of the conveyer 4, is set in rotation by a driving element 14 to set in rotation the rollers 5.

The driving element 14 is obtained by means of a chain 15 and is able to move relative to the base structure 2, actuated by a gear wheel 16a that enmeshes with the chain itself. In particular, Figure 2 shows the gear wheel 16a, keyed onto the shaft 11, i.e. the transmission shaft relative to the motorization of the conveyer 4. The chain 15 develops between the gear wheel 16a and a transmission gear wheel 16b, mounted idle on the shaft 10, which therefore serves as a drive shaft for the conveyer 4 and a transmission shaft for the chain 15.

The driving element 14 obtained by means of the chain 15 is therefore always enmeshed with the gear wheels 13 that generate the rotation of the counter-rotating rollers, both in the upper portion and in the lower portion of the conveyer 4. The continuity of the enmeshing guarantees a low noise level of the whole apparatus.

The driving element 14, and in this specific case the chain 15, advantageously comprises two sectors 17 for enmeshing with the gear wheels 13 integral with the rollers. It is thereby possible to offset, along the longitudinal axis 6, two gear wheels 13 corresponding to adjacent pairs of rollers 5.

The configuration of the chain 15 is advantageously shown in Figure 1, which illustrates the two enmeshing sectors 17 external relative to the central portion for enmeshing with the gear wheels 16a and 16b.

The present invention also relates to a method for transferring and treating food products comprising the phases of positioning food products on a conveyer provided with a velocity of advance and removing a portion of said products by means of pinching them between counter-rotating rollers comprised in the conveyer. Moreover, the aforesaid method originally provides for the velocity of rotation of the rollers that effect the pinching operation to be independent of the velocity of advance of the conveyor.

The method and the apparatus according to the present invention allow to achieve important advantages.

In the first place, by making the velocity of rotation of the rollers independent of the velocity of advance of the conveyer, it is possible to increase the production rate without interfering on the quality of the treated product. In particular, it is possible to increase the speed of advance of the conveyer without damaging the product and without excessively removing its pulp.

The aforesaid advantages are achieved with a simple structure, that does not substantially modify or complicate the structure of known apparatuses.

In addition to the advantages set out above, one can also add the ability to reach low noise levels, which fall within prescribed standards and allow the presence of operators even during while the apparatus is in operation.

## Claims

1. An apparatus (1) for transferring and treating food products, of the type comprising:
a base structure (2);
a conveyer (4) slidingly engaged on said base structure (2) and provided with a plurality of rollers (5) rotating about a longitudinal axis (6) and associated in pairs of mutually counter-rotating rollers to remove a portion of the products,
**characterised in that** the rollers (5) are operable in rotation at a velocity that is independent of the velocity of advance of the conveyer (4), said rollers being kept in rotation along a whole development of the conveyer.

2. An apparatus as claimed in claim 1, wherein the roller (5) are operatively connected to a driving element (14) that is movable relative to the base structure (2).

3. An apparatus as claimed in claim 2, wherein the driving element (14) comprises at least to sectors (17) for enmeshing with gear wheels (13) integral with the rollers (5), to be able to offset two adjacent gear wheels (13) along the longitudinal axis (6).

4. An apparatus as claimed in claim 2 or 3, wherein the driving element (14) is obtained by means of a chain (15) driven by at least a gear wheel (16a) mounted able to rotate on said base structure (2).

5. An apparatus as claimed in claim 4, wherein the gear wheel (16a) that drives the chain (15) is keyed onto a transmission shaft (11) for motorising the conveyer.

6. A method for transferring and treating food products of the type comprising the following phases:
positioning the food products on a conveyer provided with a velocity of advance;
removing a portion of said products by pinching between counter-rotating rollers comprised in the conveyer,
**characterised in that** the velocity of rotation of the rollers that effect the pinching operation is independent of the velocity of advance of the conveyer said rollers being kept in rotation along a whole development of the conveyer.

## Patentansprüche

1. Vorrichtung (1) zum Überführen und zur Behandlung von Nahrungsmitteln, der Art umfassend:
ein Grundgestell (2);
einen verschiebbar an dem genannten Grundgestell (2) angeordneten Förderer (4), der eine Vielzahl von um eine Längsachse (6) drehenden Rollen (5) aufweist, die in Form von Paaren gegeneinander drehender Rollen einen Teil der Produkte entfernen,
**dadurch gekennzeichnet, dass** die Rollen (5) mit einer von der Vorschubgeschwindigkeit des Förderers (4) unabhängigen Drehgeschwindigkeit betätigbar sind, wobei die genannten Rollen über die gesamte Erstreckung des Förderers in Drehung gehalten werden.

2. Vorrichtung nach Anspruch 1, bei der die Rollen (5) mit einem Antriebselement (14) betriebsverbunden sind, das gegenüber dem Grundgestell (2) beweglich ist.

3. Vorrichtung nach Anspruch 2, bei der das Antriebselement (14) zumindest zwei Sektoren (17) aufweist, die mit einstückig mit den Rollen (5) ausgebildeten Zahnrädern (13) kämmen, um zwei nebeneinander angeordnete Zahnräder (13) entlang der Längsachse (6) verfahren zu können.

4. Vorrichtung nach den Ansprüchen 2 oder 3, bei der das Antriebselement (14) aus einer Kette (15) besteht, die von mindestens einem drehbar an dem genannten Grundgestell (2) angeordneten Zahnrad (16a) angetriebenen wird.

5. Vorrichtung nach Anspruch 4, bei dem das die Kette (15) antreibende Zahnrad (16a) zur Motorisierung des Förderers auf eine Antriebswelle (11) gekeilt ist.

6. Verfahren zum Überführen und zur Behandlung von Nahrungsmitteln der Art umfassend folgende Schritte:
Anordnung der Nahrungsmittel auf einem eine Vorschubgeschwindigkeit aufweisenden Förderer;
Entfernung eines Teils der genannten Produkte durch Quetschen zwischen gegeneinander drehende Rollen des Förderers;
**dadurch gekennzeichnet, dass** die Drehgeschwindigkeit der den Quetschvorgang ausführenden Rollen unabhängig von der Vorschubgeschwindigkeit des Förderers ist, wobei die genannten Rollen entlang der gesamten Estreckung des Förderers in Drehung gehalten werden.

## Revendications

1. Un dispositif (1) pour le transfert et le traitement de produits alimentaires, du type comprenant:
- une structure de base (2);
- un convoyeur (4) engagé de manière coulissante sur ladite structure de base (2) et pourvu d'une pluralité de rouleaux (5) pivotant autour d'un axe longitudinal (6) et associés en paires de rouleaux mutuellement contre-rotatifs pour emporter une portion des produits,
**caractérisé en ce que** les rouleaux (5) sont actionnés en rotation à une vitesse indépendante de la vitesse d'avancement du convoyeur (4), lesdits rouleaux étant mis en rotation le long de tout le développement du convoyeur.

2. Un dispositif selon la revendication 1, dans lequel les rouleaux (5) sont opérativement reliés à un élément actionneur (14) mobile par rapport à la structure de base (2).

3. Un dispositif selon la revendication 2, dans lequel l'élément actionneur (14) comprend au moins deux secteurs (17) d'engrènement avec les roues dentées (13) intégrales aux rouleaux (5), pour pouvoir décaler deux roues dentées (13) adjacentes le long de l'axe longitudinal (6).

4. Un dispositif selon la revendication 2 ou 3, dans lequel l'élément actionneur (14) est obtenu au moyen d'une chaîne (15) actionnée par au moins une roue dentée (16a) montée de manière à pouvoir pivoter sur ladite structure de base (2).

5. Un dispositif selon la revendication 4, dans lequel la roue dentée (16a) qui actionne la chaîne (15) est fixée à un arbre de transmission (11) pour motoriser le convoyeur.

6. Un procédé pour le transfert et le traitement de produits alimentaires du type comprenant les phases suivantes:
- positionnement des produits alimentaires sur un convoyeur pourvu d'une vitesse d'avancement;
- élimination d'une portion desdits produits par pincement entre les rouleaux contre-rotatifs compris dans le convoyeur,
**caractérisé en ce que** la vitesse de rotation des rouleaux qui effectuent le pincement est indépendante de la vitesse d'avancement du convoyeur, lesdits rouleaux étant maintenus en rotation le long de tout le développement du convoyeur.
